# EUROPEAN PATENT SPECIFICATION

(11) **EP 1 647 565 B1**
(45) Date of publication and mention of the grant of the patent: **16.09.2009**
(21) Application number: 05021267.9
(22) Date of filing: 29.09.2005
(51) Int. Cl.: C08G 18/48, C08J 9/00

(54) **Polyurethane foam and process for producing the same**
Polyurethanschaum und seine Herstellung
Mousse de polyuréthane et son procédé de préparation

(30) Priority: 13.10.2004 JP 2004298349
(43) Date of publication of application: 19.04.2006
(73) Proprietor: INOAC CORPORATION, Nakamura-ku Nagoya-shi Aichi (JP)
(72) Inventor: Nagazumi, Ryo, Anjo-shi Aichi (JP); Yano, Tadashi, Anjo-shi Aichi (JP)
(74) Representative: HOFFMANN EITLE

(56) References cited:
- US-A1- 2002 052 427
- US-A1- 2002 185 769
- US-A1- 2003 181 536

## Description

### FIELD OF THE INVENTION

The present invention relates to a polyurethane foam and a process for producing the same. Particularly, it relates to a polyurethane foam capable of diminishing heat generation at foaming in the case that water is used as a blowing agent and a process for producing the same.

### BACKGROUND OF THE INVENTION

The production of the polyurethane foam is carried out by mixing a polyol component and an isocyanate component under stirring to effect foaming. The polyol component contains at least a polyol and a blowing agent and the isocyanate component is composed of a polyisocyanate. Foaming is effected by the reaction of the polyol with the polyisocyanate induced by the above mixing under stirring, whereby a foam is formed.

Usually, a polyurethane foam exhibits a high exothermic temperature at it production and particularly, in the case that water is used as the above blowing agent, the exothermic temperature reaches 170°C or higher, so that there is a possibility of autoignition. Moreover, a phenomenon (scorch) that the inside of the foam is burned and yellowed by the above high exothermic temperature is apt to occur. In that case, the value of a product may be impaired in some uses of the polyurethane foam, such as in the case of the use for clothing.

Hitherto, as a method of diminishing the exothermic temperature at the production of the polyurethane foam, it is proposed to add methylene chloride or carbon dioxide gas to a raw material of the polyurethane foam. Moreover, the addition of a polyethylene powder is also proposed (for example, cf. JP-A-6-199973 (pages 2 and 3) and JP-T-2002-532596 (page 2)).

However, in the method of adding methylene chloride, methylene chloride itself is an objective substance of PRTR (Pollutant Release and Transfer Register) and its reduction is necessary in future, so that the method is hardly said as a preferable method. Moreover, in the method of adding carbon dioxide gas, since carbon dioxide gas is employed, a specialized apparatus for foaming is necessitated and hence there arises a problem of a high cost. On the other hand, in the method of adding a polyethylene powder, since the heat absorption of the polyethylene powder is about 198 J/g and thus is not so large, it is necessary to increase the amount of the polyolefin powder to be added in order to diminish the heat generation at the production of the polyurethane foam within a safe range where ignition is difficult to occur. In that case, the physical properties of the polyurethane foam is adversely affected and/or foaming itself becomes impossible.

### SUMMARY OF THE INVENTION

The invention is conceived in consideration of the above circumstances. An object of the invention is to provide a polyurethane foam capable of effectively diminishing heat generation at the production of the polyurethane foam without adding any PRTR objective substances such as methylene chloride or a polyethylene powder which exhibits only a low effect unless a large amount thereof is added and a process for producing the same.

The first aspect of the invention comprises a polyurethane foam obtained by mixing a polyol component and an isocyanate component under stirring to effect foaming, wherein water is used as a blowing agent in the polyol component, hydrous thermoplastic synthetic resin particles are added to at least one component of the polyol component and the isocyanate component, and thermoplastic synthetic resin porous particles having communicating pores formed by evaporation of water from the hydrous thermoplastic synthetic resin particles are present in the polyurethane foam after forming.

The second aspect of the invention comprises a process for producing a polyurethane foam by mixing a polyol component and an isocyanate component under stirring to effect foaming, wherein water is used as a blowing agent in the polyol component and hydrous thermoplastic synthetic resin particles are added to at least one component of the polyol component and the isocyanate component.

The invention preferably comprises the process according to the second aspect, wherein the hydrous thermoplastic synthetic resin particle has an average particle size of 30 to 200 µm and an amount of the particles to be added is from 3 to 13 parts by weight relative to 100 parts by weight of the polyol in the polyol component.

The invention preferably comprises the process according to the second aspect, wherein water is evaporated from the hydrous thermoplastic synthetic resin particles by temperature elevation of the foam at foaming induced by mixing the polyol component and the isocyanate component under stirring.

The invention preferably comprises the process according to the second aspect, wherein the hydrous thermoplastic synthetic resin particle is composed of a thermoplastic synthetic resin porous particle in which water is included and contains at least one kind of hydrous thermoplastic synthetic resin porous particles composed of polyethylene and a polyester resin.

According to the polyurethane foam of the invention and the process for producing the same, the water in the hydrous thermoplastic synthetic resin particles is evaporated by the heat generation at foaming and the heat of vaporization (heat of evaporation) at that time absorbs the heat at foaming, so that an elevation of temperature can be diminished. In addition, since the heat of vaporization of water is 2259 J/g (100°C) and is very large, the elevation of temperature at the production of the polyurethane foam can be extremely effectively diminished even when the amount of the hydrous thermoplastic synthetic resin particle to be added is not so large and hence the adverse effect induced by the addition of the large amount of the hydrous thermoplastic synthetic resin particle on the physical properties of the foam can be avoided. Furthermore, the polyurethane foam becomes a lighter one since water in hydrous thermoplastic synthetic resin particle is evaporated and released from the polyurethane foam to the outside thereof. Moreover, the hydrous thermoplastic synthetic resin particle is transformed into a thermoplastic synthetic resin porous particle having communicating pores by evaporation of the water, which remains in the polyurethane foam. And also, since closed cells having been present in the polyurethane foam are converted into communicating pores through cell breakage at the above evaporation of the water, a polyurethane foam having a higher rate of communicating pores than in usual polyurethane foams and a good air permeability is obtained.

Furthermore, in the invention, since PRTR objective substances such as methylene chloride may not be used, not only the invention is preferable in view of environmental protection but also the production cost is inexpensive since it is not necessary to provide a specialized apparatus for foaming as in the case of adding carbon dioxide gas.

### BRIEF DESCRIPTION OF THE DRAWING

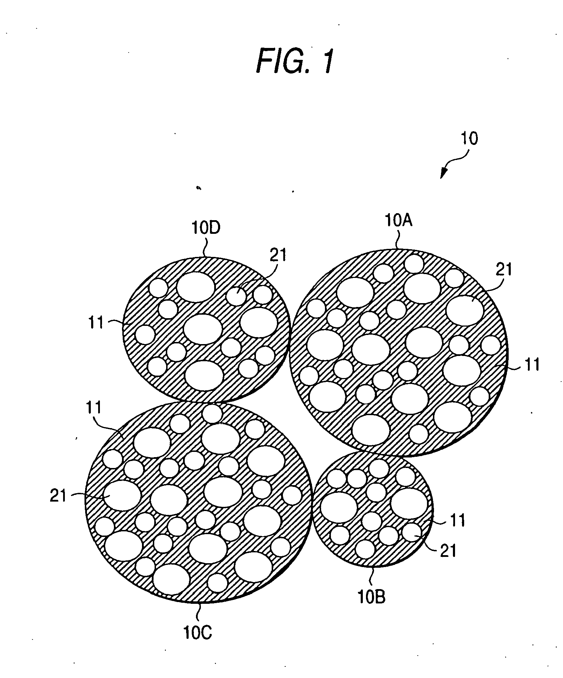

Fig. 1 is a pattern diagram of a hydrous thermoplastic synthetic resin particle.

### Description of the Reference Numerals and Signs

10 hydrous thermoplastic synthetic resin particle
10A, 10B, 10C, 10D thermoplastic synthetic resin parts in which water is included
11 thermoplastic synthetic resin
21 water

### DETAILED DESCRIPTION OF THE INVENTION

The polyol component in the invention is composed of a polyol, a blowing agent, hydrous thermoplastic synthetic resin particles, a catalyst and additive(s) optionally added.

As the polyol, ether-based polyols or ester-based polyols known as polyols for polyurethane foams can be used solely or as a mixture of a plurality of them.

As the ether-based polyols, there may be mentioned polyether polyols obtainable by adding alkylene oxides such as ethylene oxide and propylene oxide to polyhydric alcohols such as ethylene glycol, diethylene glycol, propylene glycol, dipropylene glycol, butylene glycol, neopentyl glycol, glycerin, pentaerythritol, trimethylolpropane, sorbitol, and sucrose.

Moreover, as the ester-based polyols, there may be mentioned polyester polyols obtainable by polycondensation of aliphatic carboxylic acids such as malonic acid, succinic acid, and adipic acid or aromatic carboxylic acids such as phthalic acid with aliphatic glycols such as ethylene glycol, diethylene glycol, and propylene glycol.

As the blowing agent, water is used. The amount of water to be added is preferably 5 parts by weight or more, particularly from 5 to 10 parts by weight per 100 parts by weight of the polyol.

The hydrous thermoplastic synthetic resin particle is composed of a thermoplastic synthetic resin particle in which water is included. FIG. 1 shows a pattern diagram of a hydrous thermoplastic synthetic resin particle 10. The reference numeral 11 represents a thermoplastic synthetic resin and the reference numeral 21 represents water. Moreover, the hydrous thermoplastic synthetic resin particle 10 forms a porous particle having a predetermined size through the combination of a plurality of thermoplastic synthetic resin parts 10A, 10B, 10C, and 10D in which water is included. The size of the hydrous thermoplastic synthetic resin particle is preferably a particle size of 30 to 200 µm. When the particle size is too small, the water content decreases and when the particle size is too large, stirring becomes insufficient at the mixing of the polyol component with the isocyanate component under stirring, which results in unsatisfactory foaming. Moreover, the amount of water contained in the hydrous thermoplastic synthetic resin particle is from 30 to 70% by weight. When the amount of water contained in the hydrous thermoplastic synthetic resin particle is too small, the heat-absorbing action by water is lowered at the production of the polyurethane foam and hence it becomes difficult to suppress the exothermic temperature. To the contrary, when the amount of water contained in the hydrous thermoplastic synthetic resin particle is too large, stirring becomes insufficient at the mixing of the polyol component with the isocyanate component under stirring, which results in unsatisfactory foaming. The amount of the hydrous thermoplastic synthetic resin particle to be added is preferably from 3 to 13 parts by weight per 100 parts by weight of the polyol. When the amount to be added is too small, it becomes impossible to suppress the exothermic temperature at the production of the polyurethane foam. To the contrary, when the amount to be added is too large, stirring becomes insufficient at the mixing of the polyol component with the isocyanate component under stirring, which results in unsatisfactory foaming.

The thermoplastic synthetic resin constituting the hydrous thermoplastic synthetic resin particle may be composed of polystyrene, a polymethacrylate, polyethylene, polypropylene, a polyester or a polyamide. In particular, it is preferable to use one containing one or both of a hydrous thermoplastic synthetic resin porous particle composed of polyethylene and a hydrous thermoplastic synthetic resin porous particle composed of a polyester resin as the hydrous thermoplastic synthetic resin particle in the invention.

As suitable processes for producing the hydrous thermoplastic synthetic resin particle, there may be mentioned a method of forming a water-in-oil type emulsion by dispersing and emulsifying water using a surfactant in an oil phase composed of a mixture of an unsaturated polyester and a vinyl monomer crosslinkable with the unsaturated polyester and of re-dispersing the emulsion in water and simultaneously curing and croslinking the mixture, as disclosed in JP-A-2002-363325, JP-A-2002-172644, and JP-A-2002-138157. The detailed process for producing the hydrous thermoplastic synthetic resin particle is as described in JP-A-2002-363325, JP-A-2002-172644, and JP-A-2002-138157, and hence further description thereof will be omitted herein.

As the catalyst, a known one for polyurethane foams may be used. Examples of the catalyst usable include amine catalysts such as triethylamine, triethylenediamine, and tetramethylguanidine, tin catalysts such as dibutyltin dilaurate and stannous octoate, metal catalysts (also referred to as organometallic catalysts) such as phenylmercury propionate salt and lead octenoate. The amount of the catalyst to be added is suitably determined depending on the kind of the catalyst but is generally from 0.1 to 2.0 parts by weight relative to 100 parts by weight of the polyol.

As the additives, there may be mentioned a foam stabilizer, a colorant, an antioxidant and a flame retardant. These additives may be added in optimum amounts depending on the use of the polyurethane foam and the kinds of the additives.

On the other hand, as the isocyanate component, an aliphatic or aromatic polyisocyanate having two or more isocyanate groups, a mixture thereof, and a modified polyisocyanate obtainable by modifying them can be employed. As the aliphatic polyisocyanate, there may be mentioned hexamethylene diisocyanate, isophorone diisocyanate or dicyclohexamethane diisocyanate. As the aromatic polyisocyanate, there may be mentioned toluene diisocyanate (TDI), methylenediphenyl diisocyanate (MDI), naphthalene diisocyanate, xylylene diisocyanate, polymeric polyisocyanate (crude MDI), or the like. The above hydrous thermoplastic synthetic resin particle may be contained in the isocyanate component or the hydrous thermoplastic synthetic resin particle may be contained in both of the polyol component and the isocyanate component. In any cases, the amount of the hydrous thermoplastic synthetic resin particle is preferably from 3 to 13 parts by weight relative to 100 parts by weight of the polyol.

The production of the above polyurethane foam is carried out in accordance with a known slab foaming wherein the polyol, the blowing agent (water), the hydrous thermoplastic synthetic resin particle, the catalyst, suitable additive(s) are mixed in necessary amounts under stirring to prepare a polyol component, then the polyol component and the isocyanate component are mixed under stirring and reacted under atmospheric pressure to effect foaming. At that time, isocyanate index (INDEX, a percentage of an isocyanate group to an active hydrogen group capable of reacting with the isocyanate group) is preferably from 90 to 130. When the isocyanate index is less than 90, a foam having a bad strain is obtained. To the contrary, when the index is larger than 130, a brittle, crisp, and powder-dropping foam is obtained.

The polyol and the polyisocyanate are reacted and foaming is started by mixing the polyol component and the isocyanate component under stirring. At that time, the temperature of the foam elevates by the heat of reaction, whereby the thermoplastic resin of the hydrous thermoplastic synthetic resin particle is softened and simultaneously, when the temperature reached 100°C or higher, water in the hydrous thermoplastic synthetic resin particle is evaporated to form steam. When the water in the hydrous thermoplastic synthetic resin particle is transformed into steam, the thermoplastic resin in which the water have been included until the moment can no more resist the pressure of the stream and then bursts, whereby the inside steam is released to the outside. In addition, at that moment, since the closed cells present in the foam are broken to form communicating pores, a polyurethane foam having a higher rate of communicating pores than in usual polyurethane foams and a good air permeability is formed. The hydrous thermoplastic synthetic resin particle is transformed into a porous particle having communicating pores by the above evaporation of the water and remains in the polyurethane foam, so that the air permeability of the polyurethane foam can be enhanced.

The density of the above polyurethane foam is preferably 25 kg/m³ or less, particularly from 10 to 20 kg/m³. When the density is smaller than the above range, the foam loses cushioning properties. When the density is too large, it is inferior in lightweight. The above polyurethane foam is used by cutting it into a required size according to the use.

The following will show Examples and Comparative Examples specifically but the invention is not limited to these Examples.

### EXAMPLES 1 TO 3 AND COMPARATIVE EXAMPLES 1 TO 4

The polyol used is a polyether polyol manufactured by Sanyo Chemical Industries, Ltd., trade name: GP3000, OHV=56, the amine catalyst is one manufactured by Chukyo Yushi, Co., Ltd., trade name: 33LV (triethylenediamine), the tin catalyst is one manufactured by Johoku Chemical, Co., Ltd., trade name: MRH110, the foam stabilizer is a silicon surfactant manufactured by Goldschmidt Co., Ltd., trade name: B8110, the polyethylene powder is an LDPE having an average particle size of 40 µm and a specific gravity of 0.93, the hydrous thermoplastic synthetic resin particle is a porous particle wherein water is included in a polyethylene resin, which is manufactured by Shiraishi Calcium Kaisha, Ltd., trade name: MW Powder having an average particle size of 40 µm, water content of 60%, and a specific gravity of 0.97, the polyisocyanate is one manufactured by Nippon Polyurethane Industry Co., Ltd., trade name: T-80 (tolylene diisocyanate). Incidentally, the latent heat of melting of 1 g of the polyethylene powder in Table 1 is 198 J and the heat of vaporization of water in 1 g of the hydrous thermoplastic synthetic resin particle is 1300 J.

The above substances were used according to the formulations in Table 1 and polyurethane foams of Examples 1 to 3 and Comparative Examples 1 to 4 were produced. At that time, the components other than the polyisocyanate were charged into 3 L stirring vessel in an amount (unit: g) of 14 times the total parts by weight of the formulation in Table 1 beforehand and were stirred for 20 seconds by means of a mixer with propeller blades to form a polyol component. Then, the polyisocyanate was charged thereto in an amount (unit: g) of 14 times the parts by weight of the formulation in Table 1, followed by 5 seconds of stirring. Thereafter, the mixture was charged into a foaming box having a size of 500x500x500 mm to effect foaming.

**Table 1 (The amount of each substance is expressed by part(s) by weight)**

| | Comparative Example | | | | Example | | |
|---|---|---|---|---|---|---|---|
| | 1 | 2 | 3 | 4 | 1 | 2 | 3 |
| Polyol | 100 | 100 | 100 | 100 | 100 | 100 | 100 |
| Amine catalyst | 0.4 | 0.4 | 0.4 | 0.5 | 0.4 | 0.4 | 0.4 |
| Tin catalyst | 1 | 1 | 1 | 1 | 1 | 1 | 1 |
| Water | 7 | 5 | 7 | 7 | 7 | 7 | 5 |
| Foam stabilizer | 0.2 | 0.2 | 0.2 | 0.2 | 0.2 | 0.2 | 0.2 |
| Polyethylene powder | - | - | 30 | 100 | - | - | - |
| Hydrous thermoplastic synthetic resin particle | - | - | - | - | 5 | 10 | 5 |
| Polyisocyanate | 84.1 | 62.8 | 84.1 | 84.1 | 84.1 | 84.1 | 62.8 |
| INDEX | 110 | 110 | 110 | 110 | 110 | 110 | 110 |
| Density (kg/m³) | 16.9 | 21.2 | 18 | impossible to foam | 17.4 | 17.8 | 21.8 |
| Hardness (N) | 128 | 129 | 122 | | 120 | 122 | 127 |
| Tensile strength (kPa) | 97 | 163 | 85 | | 143 | 133 | 167 |
| Elongation (%) | 87 | 217 | 83 | | 170 | 167 | 213 |
| Compressive residual strain (%) | 10.8 | 3.3 | 7.4 | | 3.9 | 4.1 | 3.5 |
| Maximum exothermic temperature (°C) | 187 | 152 | 143 | | 141 | 118 | 126 |
| Time required for 10°C of decrease from maximum temperature (minute) | 22 | 19 | 18 | | 9 | 7 | 7 |
| Scorch (ΔYI) | 12.1 | 8.3 | 5.1 | | 3.2 | 1.6 | 1.9 |

With regard to the produced polyurethane foams of Examples and Comparative Examples, density, hardness, tensile strength, elongation, compressive residual strain, maximum exothermic temperature, time required for 10°C of decrease from maximum exothermic temperature, and scorch (yellowing) were measured. The density, hardness, tensile strength, elongation, and compressive residual strain were measured in accordance with JIS K 7222:2004, JIS K 6400-2:2004 (Method D), JIS K 6400-5:2004, JIS K 6400-5:2004, and JIS K 6400-4:2004 (Method A), respectively. With regard to the maximum exothermic temperature, the temperature in the foam was measured by effecting foaming with setting a thermocouple in a central part of the foaming box, and then the highest temperature of the measured temperatures was determined as the maximum exothermic temperature. Moreover, time required for 10°C of decrease from maximum exothermic temperature was measured and the measured time was determined as the time required for 10°C of decrease from maximum exothermic temperature. With regard to the scorch (yellowing), color difference (yellow index) between a central part (a part of high exothermic temperature) and a peripheral part (a part of low exothermic temperature) of the foam, which was left standing for one day after the foaming production, by means of a colorimeter and the scorch was judged by the color difference (ΔYI). The larger the color difference (yellow index) is, the larger the scorch (yellowing) is. The results are as shown in the bottom column of Table 1. With regard to Comparative Example 4, since foaming was not achieved owing to reaction inhibition caused by the insufficient stirring and the addition of large amount of the polyethylene powder, the measurement of the density and the like could not be carried out. The following will explain the results of the measurements.

### (1) Comparison between Comparative Example 1 and Example 1

When Comparative Example 1 wherein the added amount of water was 7 parts by weight and no hydrous thermoplastic synthetic resin particle was added was compared with Example 1 wherein the added amount of water was 7 parts by weight and the hydrous thermoplastic synthetic resin particle was added in an amount of 5 parts by weight, the density was 16.9 kg/m³ in Comparative Example 1 and 17.4 kg/m³ in Example 1 and both had low density and were excellent in lightweight. The hardness was 128 N in Comparative Example 1 and 120 N in Example 1 and they were nearly equal. With regard to the tensile strength, elongation, and compressive residual strain, Example 1 was remarkably excellent in all these properties as compared with Comparative Example 1. The maximum exothermic temperature was 187°C in Comparative Example 1 while it was 141°C in Example 1 and thus the temperature was as much as 46°C lower in Example 1. Furthermore, the time required for 10°C of decrease from maximum exothermic temperature was 22 minutes in Comparative Example 1 while it was 9 minutes in Example 1, which was not more than a half of the former. Since the maximum exothermic temperature of 187°C in Comparative Example 1 is higher than the decomposition temperature of a urethane bond (150°C) and the decomposition temperature of a urea bond (180°C), it is presumed that the decrease of the above tensile strength is induced by the high maximum exothermic temperature. The scorch was 12.1 in Comparative Example 1 while it was 3.2 in Example 1, which was a quarter of the former, and thus the scorch extremely hardly occurred in Example 1 by comparison.

### (2) Comparison between Comparative Example 2 and Example 3

When Comparative Example 2 wherein the added amount of water was 5 parts by weight and no hydrous thermoplastic synthetic resin particle was added was compared with Example 3 wherein the added amount of water was 5 parts by weight and the hydrous thermoplastic synthetic resin particle was added in an amount of 5 parts by weight, the density was 21.2 kg/m³ in Comparative Example 2 and 21.8 kg/m³ in Example 3. The hardness was 129 N in Comparative Example 2 and 127 N in Example 3 and they were nearly equal. With regard to the tensile strength, elongation, and compressive residual strain, Comparative Example 2 and Example 3 were nearly equal. The maximum exothermic temperature was 152°C in Comparative Example 2 while it was 126°C in Example 3 and thus the temperature was as much as 26°C lower in Example 3. Furthermore, the time required for 10°C of decrease from maximum exothermic temperature was 19 minutes in Comparative Example 2 while it was 7 minutes in Example 3, which was not more than a half of the former. The scorch was 8.3 in Comparative Example 2 while it was 1.9 in Example 3, which was about a quarter of the former, and thus the scorch extremely hardly occurred in Example 3 by comparison.

### (3) Comparison between Comparative Example 3 and Example 1

When Comparative Example 3 wherein the added amount of water was 7 parts by weight and the polyethylene powder was added in an amount of 30 parts by weight was compared with Example 1 wherein the added amount of water was 7 parts by weight and the hydrous thermoplastic synthetic resin particle was added in an amount of 5 parts by weight, the density was 18 kg/m³ in Comparative Example 3 and 17.4 kg/m³ in Example 1 and both had low density and were excellent in lightweight. The hardness was 122 N in Comparative Example 3 and 120 N in Example 1 and they were nearly equal. With regard to the tensile strength, elongation, and compressive residual strain, Example 1 was remarkably excellent in all these properties as compared with Comparative Example 3. The maximum exothermic temperature was 143°C in Comparative Example 3 while it was 141°C in Example 1 and thus both were nearly equal and thus the maximum temperature were lower than in Comparative Examples 1 and 2. Moreover, the time required for 10°C of decrease from maximum exothermic temperature was 18 minutes in Comparative Example 3 while it was 9 minutes in Example 1, which was a half of the former. The scorch was 5.1 in Comparative Example 3 while it was 3.2 in Example 1, which was about two third of the former, and thus the scorch hardly occurred in Example 1 by comparison.

### (4) Comparison between Comparative Example 3 and Example 2

When Comparative Example 3 wherein the added amount of water was 7 parts by weight and the polyethylene powder was added in an amount of 30 parts by weight was compared with Example 2 wherein the added amount of water was 7 parts by weight and the hydrous thermoplastic synthetic resin particle was added in an amount of 10 parts by weight, the density was 18 kg/m³ in Comparative Example 3 and 17.8 kg/m³ in Example 2 and both had low density and were excellent in lightweight. The hardness was 122 N in Comparative Example 3 and 122 N in Example 2 and they were equal. With regard to the tensile strength, elongation, and compressive residual strain, Example 2 was remarkably excellent in all these properties as compared with Comparative Example 3. The maximum exothermic temperature was 143°C in Comparative Example 3 while it was 118°C in Example 2 and thus the temperature was as much as 25°C lower in Example 2 than in Comparative Example 3. Moreover, the time required for 10°C of decrease from maximum exothermic temperature was 18 minutes in Comparative Example 3 while it was 7 minutes in Example 2, which was not more than a half of the former. The scorch was 5.1 in Comparative Example 3 while it was 1.6 in Example 2, which was not more than one third of the former, and thus the scorch hardly occurred in Example 2 by comparison.

### (5) Comparison between Comparative Example 1 and Comparative Example 3

When Comparative Example 1 wherein the added amount of water was 7 parts by weight and no polyethylene powder was added was compared with Comparative Example 3 wherein the added amount of water was 7 parts by weight and the polyethylene powder was added in an amount of 30 parts by weight, the density was 16.9 kg/m³ in Comparative Example 1 and 18 kg/m³ in Comparative Example 3 and both had low density and were excellent in lightweight. The hardness was 128 N in Comparative Example 1 and 122 N in Comparative Example 3 and they were nearly equal. With regard to the tensile strength and elongation, Comparative Example 3 was inferior to Comparative Example 1 in all these properties. The compressive residual strain was 10.8% in Comparative Example 1 while it was 7.4% in Comparative Example 3 and thus it was better in Comparative Example 3. The maximum exothermic temperature was 187°C in Comparative Example 1 while it was 143°C in Comparative Example 3 and thus the temperature was as much as 44°C lower in Comparative Example 3. The time required for 10°C of decrease from maximum exothermic temperature was 22 minutes in Comparative Example 1 while it was 18 minutes in Comparative Example 3, which was 4 minutes shorter. The scorch was 12.1 in Comparative Example 1 while it was 5.1 in Comparative Example 3, and thus the scorch hardly occurred in Comparative Example 3 by comparison.

### (6) Comparison between Example 1 and Example 2

When Example 1 wherein the added amount of the hydrous thermoplastic synthetic resin particle was 5 parts by weight was added was compared with Example 2 wherein the added amount of the hydrous thermoplastic synthetic resin particle was 10 parts by weight, the physical properties of the density, hardness, tensile strength, elongation, and compressive residual strain were hardly changed. The maximum exothermic temperature was 141°C in Example 1 while it was 118°C in Example 2 and thus the temperature was as much as 23°C lower in Example 2 than in Example 1. The time required for 10°C of decrease from maximum exothermic temperature was 9 minutes in Example 1 while it was 7 minutes in Example 2, which was 2 minutes shorter. The scorch was 3.2 in Example 1 while it was 1.6 in Example 2, which was a half of the former, and thus the scorch hardly occurred in Example 2 by comparison. Thus, by increasing the added amount of the hydrous thermoplastic synthetic resin particle, the lowering effect of the maximum exothermic temperature and the shortening effect of the cooling (cooling on standing) time can be further enhanced.

### (7) Comparison between Example 1 and Example 3

When Example 1 wherein the added amount of water was 7 parts by weight and the added amount of the hydrous thermoplastic synthetic resin particle was 5 parts by weight was added was compared with Example 3 wherein the added amount of water was 5 parts by weight and the added amount of the hydrous thermoplastic synthetic resin particle was 5 parts by weight, the density and hardness were higher in both properties in Example 3 and, with regard to the tensile strength, elongation, and compressive residual strain, Example 3 is superior to Example 1. The maximum exothermic temperature was 141°C in Example 1 while it was 126°C in Example 3 and thus it was 15°C lower in Example 3 than in Example 1. The time required for 10°C of decrease from maximum exothermic temperature was 9 minutes in Example 1 while it was 7 minutes in Example 3, which was 2 minutes shorter. The scorch was 3.2 in Example 1 while it was 1.9 in Example 3, which was nearly a half of the former, and thus the scorch hardly occurred in Example 3 by comparison.

As are understood from the above measured results, by adding the hydrous thermoplastic synthetic resin particle, tensile strength, elongation, and compressive residual strain can be improved and also maximum exothermic temperature can be lowered. In addition, the cooling (cooling on standing) time of the foam can be shortened and further the generation of scorch can be reduced. Moreover, by adding the water-containing thermoplastic synthetic resin particle in an amount smaller than the polyethylene powder, the lowering effect of the maximum exothermic temperature and the shortening effect of the cooling (cooling on standing) time as well as the reducing effect of the generation of scorch are obtained. Furthermore, with regard to the tensile strength and elongation which are hardly affected by adding the polyethylene powder, the physical properties can be improved by adding the hydrous thermoplastic synthetic resin particle.

## Claims

1. A process for producing a polyurethane foam by mixing a polyol component and an isocyanate component with stirring to effect foaming, wherein water is used as a blowing agent in the polyol component and hydrous thermoplastic synthetic resin porous particles including 30-70% by weight water are added to the polyol component and/or the isocyanate component.

2. A process for producing a polyurethane foam according to Claim 1, wherein the hydrous thermoplastic synthetic resin particles have an average particle size of 30 to 200 µm and 3 to 13 parts by weight of the particles are added relative to 100 parts by weight of the polyol in the polyol component.

3. A process for producing a polyurethane foam according to Claim 1 or Claim 2, wherein water is evaporated from the hydrous thermoplastic synthetic resin particles by temperature elevation of the foam at foaming induced by mixing the polyol component and the isocyanate component with stirring.

4. A process for producing a polyurethane foam according to any of Claims 1 to 3, wherein the porous hydrous thermoplastic synthetic resin particles are composed of a polyethylene resin and/or a polyester resin.

5. A polyurethane foam obtainable by a process according to any of Claims 1 to 4.

## Patentansprüche

1. Verfahren zur Herstellung von Polyurethanschaum durch Mischen einer Polyolkomponente und einer Isocyanatkomponente unter Rühren, wodurch ein Aufschäumen bewirkt wird, wobei in der Polyolkomponente Wasser als Treibmittel verwendet wird und wasserhaltige poröse thermoplastische Kunstharzpartikel, die 30 bis 70 Gew.% Wasser enthalten, zur Polyolkomponente und/oder zur Isocyanatkomponente hinzugefügt werden.

2. Verfahren zur Herstellung von Polyurethanschaum gemäß Anspruch 1, worin die wasserhaltigen thermoplastischen Kunstharzpartikel eine mittlere Partikelgröße von 30 bis 200 µm haben und 3 bis 13 Gew.-Teile an Partikeln in Bezug auf 100 Gew.-Teile des Polyols in der Polyolkomponente hinzugegeben werden.

3. Verfahren zur Herstellung von Polyurethanschaum gemäß Anspruch 1 oder 2, worin durch den Temperaturanstieg des Schaumes beim durch das Mischen der Polyolkomponente und der Isocyanatkomponente unter Rühren hervorgerufenen Schäumen das Wasser aus den wasserhaltigen thermoplastischen Kunstharzpartikeln verdampft.

4. Verfahren zur Herstellung von Polyurethanschaum gemäß mindestens einem der Ansprüche 1 bis 3, worin die porösen, wasserhaltigen, thermoplastischen Kunstharzpartikel aus einem Polyethylenharz und/oder einem Polyesterharz aufgebaut sind.

5. Polyurethanschaum, der durch das Verfahren gemäß mindestens einem der Ansprüche 1 bis 4 erhältlich ist.

## Revendications

1. Procédé pour produire une mousse de polyuréthanne par mélange d'un composant de polyol et d'un composant d'isocyanate en agitant pour déclencher l'expansion, dans lequel de l'eau est utilisée comme agent gonflant dans le composant de polyol et des particules poreuses de résine synthétique thermoplastique hydratée comprenant 30 à 70 % en poids d'eau sont ajoutés au composant de polyol et/ou au composant d'isocyanate.

2. Procédé pour produire une mousse de polyuréthanne selon la revendication 1, dans lequel les particules de résine synthétique thermoplastique hydratée ont une taille particulaire moyenne de 30 à 200 µm et 3 à 13 parties en poids des particules sont ajoutées par rapport à 100 parties en poids du polyol dans le composant de polyol.

3. Procédé pour produire une mousse de polyuréthanne selon la revendication 1 ou 2, dans lequel l'eau est évaporée des particules de résine synthétique thermoplastique hydratée en élevant la température de la mousse en cours d'expansion induite par mélange du composant de polyol et du composant d'isocyanate sous agitation.

4. Procédé pour produire une mousse de polyuréthanne selon l' une quelconque des revendications 1 à 3, dans lequel les particules poreuses de résine synthétique thermoplastique hydratée sont composées d'une résine de polyéthylène et/ou d'une résine de polyester.

5. Mousse de polyuréthanne pouvant être obtenue par un procédé selon l'une quelconque des revendications 1 à 4.
